# EUROPÄISCHE PATENTSCHRIFT

(11) **EP 1 819 450 B1**
(45) Veröffentlichungstag und Bekanntmachung des Hinweises auf die Patenterteilung: **03.09.2008**
(21) Anmeldenummer: 05815489.9
(22) Anmeldetag: 02.12.2005
(51) Int. Cl.: B05D 1/32

(54) **VERFAHREN ZUM BEARBEITEN VON KUNSTSTOFF-SUBSTRATEN MIT EINEM SCHRITT DES MASKIERENS EINER SUBSTRAT-TEILFLÄCHE**
METHOD OF TREATMENT PLASTIC SUBSTRATES INCLUDING THE STEP OF MASKING A PARTIAL AREA OF THE SUBSTRATE
PROCEDE DE TRAITEMENT D'UN SUBSTRAT EN PLASTIQUE COMPORTANT UNE ETAPE DE MASQUAGE D'UNE PARTIE DE LA SURFACE DU SUBSTRAT

(30) Priorität: 03.12.2004 DE 102004058265
(43) Veröffentlichungstag der Anmeldung: 22.08.2007
(73) Patentinhaber: Freeglass GmbH & Co. Kg, 71409 Schwaikheim (DE)
(72) Erfinder: BUTSCH, Erwin, 71364 Winnenden (DE); TURAN, Ahmet, 71573 Allmersbach im Tal (DE)
(86) Internationale Anmeldenummer: PCT/EP2005/012928
(87) Internationale Veröffentlichungsnummer: WO 2006/058783

(56) Entgegenhaltungen:
- EP-A- 0 857 600
- WO-A-91/13692
- DE-A1- 19 737 065
- GB-A- 2 146 267
- US-A- 5 866 199

## Beschreibung

Die Erfindung bezieht sich auf ein Verfahren zum Bearbeiten von Kunststoff-Substraten mit einem Schritt des Maskierens einer Substrat-Teilfläche gegen Beschichtungen mit den Merkmalen des Oberbegriffs des Patentanspruchs 1. Die Erfindung bezieht sich auch auf Verfahren zum Anbringen von weiteren Materialien auf das Kunststoff-Substrat nach dem Herstellen der Beschichtung.

Es ist generell bekannt, dass bestimmte, auf Substrate aufgebrachte Beschichtungen das spätere Anhaften / Ankleben von Anbaukomponenten behindern können.

Bei der Herstellung von Isolierglasscheiben, die aus zwei Glasscheiben und einem geklebten Abstandhalterahmen zusammengesetzt werden, muss deshalb eine Wärme dämmende Beschichtung einer (später im Innenraum des Isolierglases liegende) Glasscheibenoberfläche in dem Klebebereich entfernt werden, um die Langzeithaftung des Abstandhalterahmens nicht zu gefährden. Hierzu sind Vorrichtungen bekannt, mit welchen (metall-)beschichtete Glasscheiben, wenn sie für Isolierglas oder andere Einsatzzwecke verwendet werden sollen, wenigstens im Randbereich entschichtet werden können. Solche Vorrichtungen arbeiten mit thermischen Einrichtungen (Gasflammen oder Plasma, vgl. DE 34 03 682 C) oder mit mechanischen Einrichtungen, wie Schleif- oder Polierscheiben (DE 41 18 241 A).

Es ist bekannt (US 6,800,171), beispielsweise Fensterscheiben gegen unerwünschte Farbspuren (teilweise) zu maskieren, wobei vor dem Auftragen von Farbe auf den Fensterrahmen ein Film bildendes Maskierungsmedium lokal auf die angrenzenden Glasflächen aufgetragen wird. Dieser Film, zu dessen Herstellung verschiedene Stoffe beschrieben werden, kann nach Abschluss der Lackierarbeiten mitsamt darauf befindlichen Farbspritzern oder -spuren ähnlich wie ein Klebestreifen abgezogen werden. Gute Abziehbarkeit wird allerdings dort mithilfe einer haftvermindernden Schicht (beispielsweise Glyzerin) erreicht, die ihrerseits möglicherweise schlecht von der Substratoberfläche entfernbar ist und nicht als Untergrund für weitere Beschichtungen oder dgl. dienen kann.

DE 196 53 585 A1 beschreibt ausführlich wiederverwendbare Abziehlacke auf Wasserbasis für Verwendung auf verschiedensten Substraten, darunter auch Glas- und Kunststoffscheiben. Diese Abziehlacke sind für den temporären Schutz von Oberflächen gegen unerwünschte Beschichtungen vorgesehen.

DE 197 37 065 C2 beschreibt Maßnahmen zum Aufbringen einer pastösen Masse in Form von temporär nutzbaren Abdeckstreifen bei Karosseriearbeiten. Dort wird ein lösemittelfreies und/oder haftvermittlerfreies Plastisol auf PVC- oder PMMA-Basis vorgeschlagen. Ungeachtet der Bezeichnung als "Masse" werden aber auch hier dünne Filme des Materials beispielsweise mithilfe eines Roboters nebst Düsenwerkzeug aufgetragen.

DE 691 33 084 T2 beschreibt spezielle Verfahren und Materialien zum temporären Abdecken von Flächen gegen unerwünschte Lackspuren, wobei das Abdeckmaterial mit Wasser abspül-oder abwaschbar ist.

US 6,773,746 B1 offenbart ebenfalls wasserlösliche und abwaschbare Materialien zum temporären Abdecken von Flächen gegen unerwünschte Beschichtungen.

US 5,866,199 offenbart eine Zusammensetzung, die als Beschichtung / Grundierung verwendbar ist und unterschiedliche Haftungseigenschaften auf Glas- oder glasähnlichen Oberflächen einerseits und auf nicht glasähnlichen Oberflächen besitzt. Damit soll insbesondere das Beschichten oder Anstreichen von Gegenständen, beispielsweise von Fensterrahmen, erleichtert werden, bei denen Glas- und Nichtglas-Oberflächen unmittelbar aneinander liegen. Da diese Zusammensetzung sich von Glasoberflächen zusammen mit einem eventuell später darüber aufgetragenen Lack leicht entfernen lässt, kann ein Abkleben der Glasoberfläche entfallen, indem diese Zusammensetzung zunächst frei über die Trennlinie hinweg aufgetragen wird und sodann die Farbe darauf aufgebracht wird.

Bei keinem der vorgenannten Dokumente wird erwähnt, dass die maskierte Fläche freigehalten werden soll, damit später eine einwandfreie Haftung einer weiteren Komponente auf der zuvor maskierten Oberfläche sichergestellt werden kann.

Aus DE 696 07 538 T2 ist es bekannt, dass Verglasungsscheiben mit randseitigen Profilen ausgestattet werden können, die auf der Scheibenoberfläche haften. In diesem Dokument ist nicht die Rede von einer Beschichtung der Scheibenfläche, welche das Anhaften der Profile behindern könnte. Die randseitigen Profile sind nicht als Maskierung, sondern als Befestigungsmittel zum Festlegen der Scheibe in einer Karosserieöffnung vorgesehen.

US 5,492,750 beschreibt eine wiederverwendbare Maskierung in Gestalt eines Metall-Profils, das für einen Beschichtungsprozess auf dem Rand einer Fensterscheibe angebracht wird, um den von ihm überdeckten Bereich vor dem Aufbringen einer (elektrisch leitfähigen) Beschichtung zu schützen. Um unerwünschte Verfärbungen in dem Übergangsbereich von der beschichteten Fläche zum maskierten Rand zu vermeiden, wird dort eine Zweiteilung der Maske in einen sehr dünnen Basisstreifen, der funktional eine Art Dichtlippe bildet und den unmittelbaren Rand der Beschichtung definiert, und einen dickeren, das Handling der Maske vereinfachenden Deckstreifen vorgeschlagen. Diese Maskierung haftet nicht an der Scheibenoberfläche, sondern liegt entweder durch ihr Eigengewicht auf oder wird mit Klammern an der Scheibe befestigt.

Kunststoffscheiben und -körper (z. B. Leuchtenabdeckungen) für den Einbau in Fahrzeugkarosserien werden mit einer Schutzbeschichtung versehen, um die Empfindlichkeit ihrer Oberflächen gegen mechanische Einwirkungen zu verringern bzw. ihre Kratzfestigkeit zu verbessern. Das meist verwendete Material ist ein Polysiloxan, das eine sehr gute Adhäsion zum Kunststoff-Substrat hat. Die Kratzfest-Beschichtung wird auf die empfindlichen Oberflächen üblicherweise möglichst bald nach dem Urformprozess (Einspritzen einer Kunststoffschmelze in eine Kavität) aufgebracht, um schon während weiterer Behandlungsschritte beim Hersteller Kontamination (Staub, Feuchtigkeit) und Schäden weitestgehend auszuschließen. Ein Beispiel für eine solche beschichtete Kunststoff-Scheibe ist in EP 857 600 B1 beschrieben.

Für den Einbau in eine Fahrzeugkarosserie werden diese Scheiben sehr häufig vorbereitet, indem auf Teile ihrer Oberflächen zusätzliche Komponenten (Rahmen, Dichtlippen etc.) angebracht werden. Diese werden oft in einem weiteren Spritzvorgang angespritzt (im letztgenannten Dokument ebenfalls beschrieben), oder auch anextrudiert (beispielsweise Profilstränge und Klebestränge für die endgültige Befestigung). Dies ist auch Standard bei Glasscheiben, wobei diese allerdings keine Kratzfest-Beschichtung benötigen.

Eine Beschichtung, speziell die vorerwähnte Kratzschutz-Beschichtung, kann die Adhäsion solcher weiterer Komponenten schwächen. Man verhindert üblicherweise den Niederschlag der Kratzfest-Beschichtung lokal durch Aufbringen von Klebebändern, die nach dem Beschichtungsschritt entfernt werden. Dies ist jedoch mit sehr viel Aufwand verbunden und führt oft zu Störungen. Die Maske kann bei unvollständiger Haftung durch Kapillaren teilweise von der Polysiloxanbeschichtung unterwandert werden. Die unerwünschten Niederschläge müssen nach dem Abnehmen der Maskierung gesondert entfernt werden.

Der Erfindung liegt die Aufgabe zu Grunde, ein Verfahren zum Bearbeiten von Kunststoff-Substraten mit einem Schritt des Maskierens einer Substrat-Teilfläche gegen Beschichtungen anzugeben, das die Adhäsionsfähigkeit der maskierten Flächen möglichst wenig beeinträchtigt und das die Besonderheiten der Kunststoffverarbeitung berücksichtigt.

Diese Aufgabe wird erfindungsgemäß mit den Merkmalen des Patentanspruchs 1 gelöst. Die Merkmale der Unteransprüche geben vorteilhafte Weiterbildungen dieser Erfindung an.

Die Merkmale des Patentanspruchs 17 geben ein scheibenförmiges Substrat an, das einer Bearbeitung mit dem erfindungsgemäßen Verfahren unterzogen wurde.

Man bringt erfindungsgemäß eine Maskierung durch Anspritzen oder Anextrudieren eines Körpers aus einer schwach am Substrat haftenden Kunststoffschmelze auf solche Teilflächen eines Kunststoff-Substrats auf, die von der Beschichtung frei bleiben sollen. Die Maskierung kann dabei entweder von Hand oder maschinell aufgebracht werden, wobei wegen der höheren Exaktheit der letzteren Variante der Vorzug zu geben sein wird. Die Maskierung kann einteilig oder -wenn nicht zusammenhängende Flächen des Substrats von der Beschichtung freizuhalten sind- auch mehrteilig aufgebracht werden.

Das Material der Maskierung ist so auszuwählen und/oder auf das Kunststoff-Material des Substrats (das zumeist Polycarbonat ist) so abzustimmen, dass es dessen Oberflächenbeschaffenheit und Haftfähigkeit nicht nachteilig verändert, so dass vor dem nachfolgenden Aufbringen von am Kunststoff-Substrat haftenden Komponenten nicht erst noch eine aufwändige Teilreinigung durchgeführt werden muss. Entfall zusätzlicher Reinigungsschritte minimiert vorteilhaft auch das Risiko einer Beschädigung der angrenzenden beschichteten Flächen.

Eine Maske aus einer Schmelze kann vorteilhaft mit einem dem Beschichtungsschritt vorlaufenden Schritt des An- oder Umspritzens angebracht werden, wobei das Kunststoff-Substrat nach seiner (durch Spritzen erfolgten) Urformung ganz, oder bei entsprechender Ausführung der Maskierung auch nur teilweise entformt werden muss. Die Form zum Anspritzen der Schmelze muss lediglich an den Kontaktstellen mit dem Substrat hochpräzise gearbeitet sein, während die vom Substrat abgewandten Seiten dieser Kavität für die Maskierung sehr einfache, grob auf den Umriss des Substrats abgestimmte Geometrien haben können.

Vorzugsweise wird man dabei auf geringen Materialverbrauch (geringe Dicke der Maskierung) achten und/oder auf leichte Abnehmbarkeit. Um das Abnehmen der Maskierung insbesondere durch automatische Werkzeuge zu ermöglichen, können an den Körper der Maskierung Mittel zum Abnehmen der Maskierung, in Gestalt von Eingriff- oder Greifkonturen wie Ausnehmungen, Bohrungen, Ansätze, Rippen oder dgl. zum Ansetzen von Werkzeugen angeformt werden.

Die Kosten für eine Form zum Anformen / Anspritzen der Maskierungs-Schmelze werden daher im Vergleich mit dem Nutzen einer sehr hohen und genauen Reproduzierbarkeit der Maskierung verhältnismäßig gering sein können.

Eine andere Option ist es, eine viskose Schmelze oder eine pastöse Masse durch direktes Extrudieren an die von der Beschichtung freizuhaltenden Flächenanteile des Substrats zu bringen. Entsprechende Verfahren zum Extrudieren profilierter Kunststoffstränge sind an sich aus der Literatur in mannigfachen Varianten bekannt, wobei dort aber stets ein Montage- oder Dichtprofil zur endgültigen Verwendung angebracht wird, und nicht eine nur temporär als Maskierung verwendete grob geformte Abdeckung. Während bei der Herstellung solcher endgültiger Profile durch Primerauftrag für eine besonders gute Haftung zum Substrat gesorgt wird, haben Maßnahmen zur Haftverbesserung beim erfindungsgemäßen Verfahren, die über eine unerlässliche Grundhaftung und Fugenabdichtung hinausgehen, tunlichst zu unterbleiben. Das gilt naturgemäß für alle Ausführungsformen.

Wenn für eine Schmelz-Maskierung ein wiederverwendbarer Kunststoff, beispielsweise ein thermoplastisches Elastomer, benutzt wird, kann die nach dem Beschichten vom Kunststoff-Substrat entfernte Maskierungs-Masse in einen Kreislauf zurückgeführt werden, um insoweit den globalen Materialverbrauch zu reduzieren. Zum Vermeiden einer zunehmenden Verunreinigung der Schmelze mit Partikeln der Beschichtung könnte vor dem Rückführen die kontaminierte Oberfläche der Maske gereinigt, ggf. abgezogen und nur deren Kern wiederverwendet werden.

Das Verfahren zum Herstellen der Maskierung ist letztlich nur eine wenn auch eigenständige Vorstufe zur Weiterbearbeitung des beschichteten Substrats. In den Rahmen dieser Erfindung fallen deshalb auch die weiteren Schritte, nämlich das Abnehmen der Maskierung und das Anbringen weiterer Materialien auf die von der Maskierung schichtfrei gehaltenen Flächen.

Vorteilhaft bildet die Maskierung auch einen Kontaminationsschutz der von ihr bedeckten Flächen auch nach dem Auftrag der Beschichtung. Mechanische oder chemische Angriffe (Umwelteinflüsse wie Feuchte, Schmutz, Fingerabdrücke etc.) können durch Verbleiben der Maskierung am Substrat bis zeitlich unmittelbar vor dem Aufbringen der weiteren Materialien oder Komponenten abgewehrt werden.

Es ist unter diesen Randbedingungen möglich, den Rand der zunächst maskierten Fläche bzw. den Rand der Beschichtung mit den später angebrachten -zumeist opaken- Materialien gerade noch zu überdecken. Zwar wird man trotzdem einen möglichst sauberen Rand der Beschichtung herstellen, jedoch lassen sich eventuelle minimale Unebenheiten, die nach dem Abnehmen der Maskierung entstehen könnten, problemlos optisch kaschieren. Man kann deshalb die Breite der randseitigen Maskierung geringfügig (im Bereich von Millimeterbruchteilen bis max. 2 mm) geringer als die Fußbreite des später aufzubringenden Materials wählen. Diese Differenz - bzw. gegenseitige Überdeckung- wird man abhängig von der Gesamtbreite der Grundfläche wählen, die für die Anhaftung verfügbar ist, denn es versteht sich, dass bei einer geringen Gesamtbreite auch der Überdeckungsbereich des anhaftenden Materials mit der seine Haftung einschränkenden Beschichtung minimal sein muss.

Es ist darüber hinaus bei Bedarf ohne weiteres möglich, unmittelbar nach dem Abnehmen der Maskierung und vor dem Aufbringen der weiteren Materialien noch einen Haftvermittler oder Primer auf die temporär freigelegten, zuvor maskierten Flächen aufzubringen.

Vorzugsweise, jedoch nicht ausschließlich findet das erfindungsgemäße Verfahren bei Fahrzeug-Fensterscheiben aus Kunststoff Anwendung. Natürlich können auch andere Substrate, wie Abdeckplatten oder -hauben für Karosserieöffnungen, Scheinwerferabdeckungen und dgl. mit diesem Verfahren behandelt werden. Auch bei diesen Teilen kann das Anbringen von randseitigen Montage- oder Dichtprofilen erforderlich werden.

Weitere Einzelheiten und Vorteile des Gegenstands der Erfindung gehen aus der Zeichnung eines Ausführungsbeispiels und deren sich im folgenden anschließender eingehender Beschreibung hervor.

Es zeigen in vereinfachter, nicht maßstäblicher Darstellung
- Fig. 1: eine erste Teilansicht des Randbereichs einer Kunststoff-Scheibe für Fahrzeuge;
- Fig. 2: dieselbe Teilansicht nach dem Aufbringen einer Maskierung in Form eines auf den Scheibenrand aufgebrachten Profilstrangs;
- Fig. 3: dieselbe Teilansicht nach dem Aufbringen einer Kratzfest-Beschichtung auf die Kunststoff-Scheibe;
- Fig. 4: dieselbe Teilansicht nach dem Entfernen der Maskierung und dem Aufbringen eines Montageprofils sowie eines Kleberstrangs;
- Fig. 4a: ein vergrößertes Detail A aus Fig. 4 mit einer Variante.

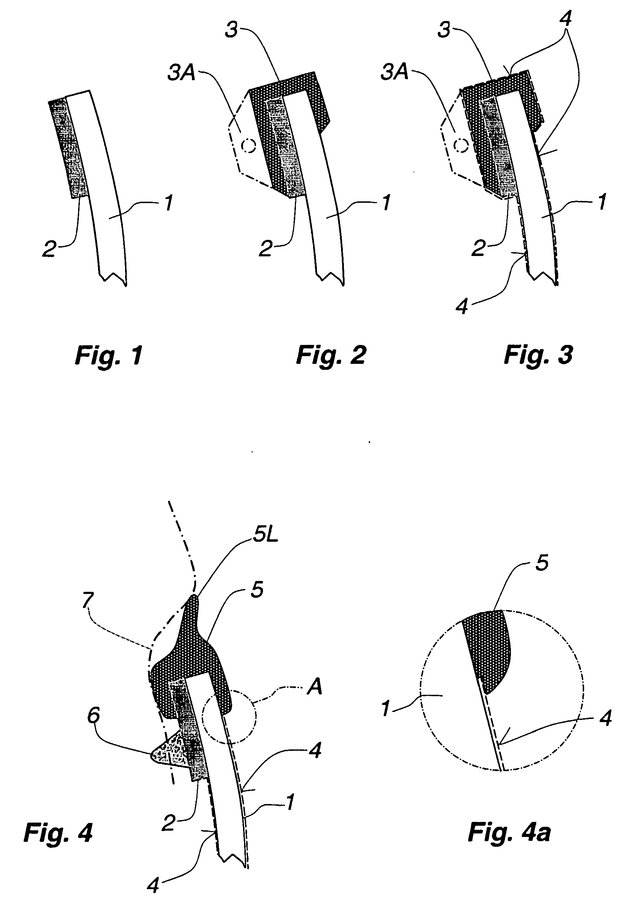

**Fig. 1** zeigt einen Randbereich einer durch Spritzen hergestellten transparenten Kunststoff-Scheibe 1 mit einem entlang dem Außenrand angespritzten oder hinterspritzten zweiten, opaken Kunststoff-Komponente, die im folgenden als Rahmen 2 bezeichnet wird. Solche Produkte und ihre Herstellverfahren sind beispielsweise aus EP 857 600 B1 bekannt. Der Rahmen 2 dient einerseits zum optischen Kaschieren der metallischen Rahmenholme, welche die von der Scheibe 1 abzudeckende Fensteröffnung umschließen. Er dient auch als Basis zum Auftragen eines Klebestrangs, mit dem die Scheibe 1 mit dem umlaufenden Flansch der Fensteröffnung verklebt wird.

In **Fig. 2** ist dieser Randbereich bereits mit einer Maskierung 3 versehen. Diese wurde in Gestalt eines Kunststoffkörpers oder -profils angebracht, das in diesem Ausführungsbeispiel die äußere (obere) Kante der Scheibe 1 u-förmig umgreift und sowohl einen Teil der Außenfläche der Scheibe 1 als auch einen wesentlichen Teil der Fläche des Rahmens 2 überdeckt. Dieses angeformte, relativ weiche Kunststoffprofil schmiegt sich praktisch fugenlos an die Scheibe 1 und den Rahmen 2 an. Es ist aber nicht dauerhaft mit den überdeckten Flächen verbunden, sondern mit geringem Kraftaufwand rückstandsfrei und ohne Schäden an der von ihm berührten Oberfläche abnehmbar. Um das Abnehmen zu erleichtern, kann vorteilhaft ein Abziehmittel an die Maskierung 3 angeformt werden. Hier ist ein solches Abziehmittel 3A in Form einer Lasche oder Rippe strichpunktiert angedeutet, die auch mit einem Loch zum Durchführen eines stiftförmigen Werkzeugs versehen sein kann. Mit solchen Abziehmitteln, die auch mehrfach vorhanden sein können, wird eine automatische Abnahme der Maskierung nach dem Beschichtungsschritt stark vereinfacht.

Ganz bevorzugt wird die Maskierung aus einem thermoplastischen Elastomer (beispielsweise einem unter dem Handelsnamen Santoprene^{™} der Fa. MobilExxon Chemical erhältlichen Material) gefertigt, dessen Verarbeitungs- oder Erweichungstemperatur deutlich unterhalb der Schmelztemperatur der Kunststoffe (beispielsweise Polycarbonat, Polyamid) liegt, aus denen die Scheibe 1 und der Rahmen 2 gefertigt sind.

Es sei angemerkt, dass sich diese Darstellung bei Verwendung eines Films aus einer Flüssigkeit oder einem Lack als Maskierung lediglich durch die geringere Dicke der Maskierung 3 und durch Entfall von Abziehhilfen unterscheiden würde. Funktional sind beide Maskierungen identisch.

Es ist auch, abweichend von der Darstellung des Ausführungsbeispiels, nicht zwingend notwendig, die Maskierung als einteiligen Körper oder Film aufzutragen. Es kann statt dessen auch sinnvoll sein, eine Maskierung aus mehreren nicht miteinander verbundenen Abschnitten vorzusehen, beispielsweise dann, wenn die von der Beschichtung frei zu haltenden Flächenanteile des Substrats keine zusammenhängende Fläche bilden. Es wäre beispielsweise denkbar, die Maskierung nur auf den Randstreifen der äußeren Oberfläche der Scheibe 1 als einen ersten Strang und auf den opaken Rahmen als einen zweiten Strang aufzubringen, die Stirnkante der Scheibe jedoch nicht zu maskieren.

Im Zustand nach **Fig. 3** wurde die Scheibe 1 nebst der Maskierung 3 vollständig mit einer Beschichtung 4 überzogen. Natürlich wird man die Maskierung nicht absichtlich beschichten, jedoch muss man auch keine gesonderten Maßnahmen treffen, um Niederschlag von Beschichtungspartikeln (Overspray) auf der Maskierung zu vermeiden. Im Ausführungsbeispiel wird eine Kratzfest-Beschichtung (Hardcoat; Polysiloxan) aufgebracht, die sich durch sehr gute Haftung an dem Material der Scheibe 1 und durch hohe Oberflächenhärte auszeichnet. Hingegen können weitere Komponenten nur vermindert auf ihrer Oberfläche haften. Die (jedenfalls im Sichtbereich der Fenster-Scheibe optisch transparente) Beschichtung ist hier vereinfacht durch gestrichelte Linien dargestellt.

Abweichend von der Darstellung könnte eine Maskierung natürlich auch nur die Stirnfläche und einen Teil die Außenfläche der Scheibe 1 bedecken, wenn man die Beschichtung 4 nicht auch vom Rahmen 2 fernhalten muss. Muss dagegen die Außenfläche der Scheibe 1 für die Montage nicht von einem Profil oder dgl. überdeckt werden (im Einbauzustand freiliegende Außenkante), so wird man die Kratzfest-Beschichtung natürlich bis zu ihrer Außenkante fortsetzen, also die gesamte Sichtfläche der Scheibe unmaskiert lassen, und ggf. nur den Rahmen maskieren, wenn dieser als Basis für eine Verklebung dient.

**Fig. 4** zeigt die fertig beschichtete Scheibe 1 nach dem Abnehmen der Maskierung 3 und dem Aufbringen sowohl eines Montageprofils 5 mit einer auskragenden Lippendichtung 5L als auch eines Klebestrangs 6. Das Montageprofil 5 kann wiederum aus einem thermoplastischen Elastomer, aber auch aus Polyurethan oder anderen für den jeweiligen Einsatzzweck geeigneten Kunststoff bestehen. Als Kleber haben sich auf diesem Gebiet Polyurethanklebemassen bewährt.

Man erkennt, dass einerseits die Beschichtung 4 nur die nicht zuvor von der Maskierung überdeckten Flächen bedeckt, dass andererseits das Montageprofil 5 und der Klebestrang 6 gerade in dem Bereich auf der Scheibe 1 und auf dem Rahmen 2 haften, der zuvor von der Maskierung 3 bedeckt war. Unschwer lässt sich hier nachvollziehen, dass derselbe Effekt auch mit einer sehr dünnen, filmartigen und abziehbaren Maskierung erreichbar ist, die die angespritzte oder extrudierte Körper-Maskierung ersetzen könnte. Es kommt letztlich auf die Dicke der Maskierung nicht an, sondern nur auf deren Dichtheit und gute Anschmiegung an die abzudeckenden Flächen, sowie auf deren einfache Anbringung und insbesondere Entfernbarkeit.

Strichpunktiert ist ein Fenster- oder Karosserieflansch 7 angedeutet, auf den die Scheibe 1 mithilfe des Montageprofils 5, das auch als Abstandhalter ("spacer") dienen kann, und der zentrierenden Dicht-Lippe 5L aufgeklebt wird, wobei der vorzugsweise aufextrudierte Klebestrang 6 natürlich entsprechend verpresst und verformt wird. Dabei wird er sich auch seitlich über die zuvor maskierte Fläche des opaken Rahmens in nicht genau vordefinierbarer Abmessung ausbreiten und findet dort eine schichtfreie Basis für die Anhaftung vor, da die gesamte Rückfläche des Rahmens maskiert wurde.

Der opake Rahmen 2 kaschiert zugleich den undefiniert geformten Klebestrang nach außen und schützt ihn vor der Einwirkung von UV-Strahlung. Man kann bei Bedarf zwischen dem Klebestrang 6 und dem Rahmen 2, sowie auch zwischen der Scheibenfläche und dem Montageprofil 5, nach Abnehmen der Maskierung 3 auch noch eine -an sich bekannte, hier nicht dargestellte- Primerschicht zur Verbesserung der Haftung auftragen.

Die Dichtlippe 5L überdeckt in Einbaulage den randseitigen Spalt zwischen der Scheibe 1 und dem angrenzenden Karosserieflansch 7.

Abweichend von dieser Darstellung kann das Montageprofil natürlich auch andere Querschnittformen haben. Es kann beispielsweise auch ohne Überdeckung der in Einbaulange außen liegenden Hauptfläche der Scheibe 1 nur an deren Stirnkante und ggf. an der innenliegenden Fläche des Rahmens 2 anliegen (sog. "flush-Verglasung"), so dass diese Hauptfläche glattflächig / flächenbündig zum angrenzenden Karosserieteil oder zu einer benachbarten Scheibe übergeht, wobei das Montageprofil in bekannter Weise den Spalt ausfüllt. In diesem Fall würde man, wie schon erwähnt, die Scheibenfläche mindestens bis zur Stirnkante der Scheibe kratzfest beschichten, und nur die Stirnkante sowie eine Teilfläche der Innenseite maskieren.

Es wäre als nicht dargestellte Alternative auch denkbar, den Klebestrang 6 nicht direkt auf das Substrat bzw. auf den opaken Rahmen, sondern in an sich bekannter Weise auf das -mit einer entsprechenden Auftrag-Fläche ausgeformte- Montageprofil aufzutragen. Dies setzt natürlich hohe Haftfähigkeit zwischen diesen Materialien voraus.

Man kann ferner vorsehen, wie in **Fig. 4a** angedeutet, dass das Montageprofil 5 auf der Sichtseite der Scheibe 1 -oder ggf. auf der Stirnkante in dem vorstehend erwähnten Ausführungsfallden von der Maskierung vorgegebenen Rand der Beschichtung noch geringfügig überdeckt. Mit dieser Ausführung wird einerseits die Haftung des Montageprofils 5 nicht wesentlich beeinträchtigt, andererseits jedoch infolge des genauen Formanschlusses des Montageprofils 5 an die Scheibe 1 ein definierter und glatter, optisch einwandfreier Abschluss des beschichteten Feldes sicher gestellt. Die geringe Flächenüberdeckung mit der Beschichtung 4 kann dabei die Haftung des Montageprofils 5 nicht wesentlich beeinträchtigen, weil auf der nicht beschichteten Basisfläche eine hinreichende Haftung sichergestellt ist.

In dem hier beispielsweise beschriebenen Anwendungsfall einer Fahrzeug-Fensterscheibe wird deren Rand auf der Innenseite meist von einer Innenverkleidung überdeckt. Deshalb stellt sich auf der Seite des Klebers 6 keine besondere Anforderung an die optische Qualität des Randes der Beschichtung 4, so dass hier keine besonderen Vorkehrungen der vorstehend erwähnten Art zu treffen sind und für den Klebestrang 6 eine vollkommen schichtfreie Basis verfügbar gehalten wird.

## Patentansprüche

1. Verfahren zum Bearbeiten von Kunststoff-Substraten (1) mit einem Schritt des Maskierens von Substrat-Teilflächen gegen unerwünschtes Beschichten dieser Teilflächen, bei dem vor einer Beschichtungsbehandlung des Substrats bestimmte Flächenanteile des Substrats mithilfe einer entfernbaren, am Substrat wenigstens temporär haftenden Maskierung (3) abgedeckt werden, **dadurch gekennzeichnet, dass** die Maskierung (3) durch Anspritzen oder Anextrudieren eines Körpers aus einer schwach am Substrat haftenden Kunststoffschmelze auf solche Teilflächen aufgetragen wird, auf die in weiteren Bearbeitungsschritten adhäsiv weitere Materialien aufzubringen sind, wobei die Verarbeitungstemperatur der Schmelze unter derjenigen des Werkstoffs oder der Werkstoffe des Substrats liegt, und die Schmelze so auf den Werkstoff oder die Werkstoffe des Substrats abgestimmt wird, dass die Maskierung (3) sich nach dem Beschichten des Substrats (1) rückstandsfrei und ohne Minderung der Adhäsionsfähigkeit der maskierten Oberfläche abziehen lässt, bevor das Substrat der weiteren Bearbeitung zugeführt wird.

2. Verfahren nach Anspruch 1, **dadurch gekennzeichnet, dass** das Substrat nach seiner Urformung in einer Spritzform mit der Maskierung (3) versehen wird, indem es ganz oder teilweise entformt und mit einer zum Anbringen der Maskierung (3) vorgesehenen Form zum Anspritzen der Schmelze zusammengebracht wird.

3. Verfahren nach Anspruch 1 oder 2, **dadurch gekennzeichnet, dass** die Maskierung (3) als einteiliger Körper oder aus mehreren nicht miteinander verbundenen Abschnitten ausgebildet wird.

4. Verfahren nach einem der vorstehenden Ansprüche, **dadurch gekennzeichnet, dass** zum Herstellen der Maskierung (3) ein wiederverwendbarer und bei Bedarf aufbereiteter Kunststoff verwendet wird.

5. Verfahren nach einem der vorstehenden Ansprüche, **dadurch gekennzeichnet, dass** die Maskierung (3) aus einem thermoplastischen Elastomer hergestellt wird.

6. Verfahren nach einem der vorstehenden Ansprüche, **dadurch gekennzeichnet, dass** das Substrat nach dem Anbringen der Maskierung (3) mit einer Kratzfestbeschichtung überzogen wird.

7. Verfahren nach einem der vorstehenden Ansprüche, **dadurch gekennzeichnet, dass** das Substrat ein Fahrzeug-Bauteil ist, konkret eine Fensterscheibe und/oder eine Karosserieabdeckung und/oder eine Scheinwerferabdeckung, die aus einer oder mehreren transparenten und/oder gefärbten und/oder opaken gespritzten Komponenten besteht.

8. Verfahren nach einem der vorstehenden Ansprüche, **dadurch gekennzeichnet, dass** die Maskierung im Randbereich des flächigen oder plattenförmigen Substrats so angebracht wird, dass sie einen Randstreifen einer oder beider Substrat-Hauptflächen und/oder dessen Stirnkante überdeckt.

9. Verfahren nach einem der vorstehenden Ansprüche zum Bearbeiten eines mit einer Maskierung (3) und mit einer Beschichtung (4) versehenen Kunststoff-Substrats (1), beispielsweise einer Kunststoff-Scheibe oder -Platte, **dadurch gekennzeichnet, dass** nach Abnehmen der Maskierung (3) mindestens ein weiteres Material adhäsiv auf einer mittels der Maskierung von der Beschichtung (4) freigehaltene Flächen des Substrats aufgebracht wird.

10. Verfahren nach Anspruch 9, **dadurch gekennzeichnet, dass** die temporäre Maskierung zeitlich erst unmittelbar vor dem Aufbringen weiteren Materials von dem Substrat abgenommen wird.

11. Verfahren nach Anspruch 9 oder 10, **dadurch gekennzeichnet, dass** nach Entfernen der Maskierung und vor dem Anbringen des weiteren Materials auf die von der Beschichtung freigehaltenen Flächen des Substrats (1) ein Haftvermittler aufgetragen wird.

12. Verfahren nach Anspruch 9 oder 10 oder 11, **dadurch gekennzeichnet, dass** ein Kunststoff-Profil (5), insbesondere ein Montageprofil für den Einbau des Substrats in eine Einbauumgebung, durch Anspritzen oder Extrudieren an von der Maskierung (3) schichtfrei gehaltene Flächenteile des Substrats (1) angebracht wird.

13. Verfahren nach einem der vorstehenden Ansprüche 9 bis 11, **dadurch gekennzeichnet, dass** ein Klebestrang (6) an von der Maskierung (3) schichtfrei gehaltene Flächenteile des Substrats (1) angebracht wird.

14. Verfahren nach den Ansprüchen 12 und 13, **dadurch gekennzeichnet, dass** der Klebestrang auf eine Auftrag-Fläche des Montageprofils aufgebracht wird.

15. Verfahren nach einem der Ansprüche 9 bis 14, **dadurch gekennzeichnet, dass** das weitere Material so angebracht wird, dass es den von der Maskierung definierten Rand der Beschichtung (4) gerade noch überdeckt.

16. Verfahren nach Anspruch 15, **dadurch gekennzeichnet, dass** das weitere Material den von der Maskierung definierten Rand der Beschichtung (4)in einem Bereich von 0,1 bis höchstens 2 mm überdeckt.

17. Scheibenförmiges Substrat (1), insbesondere Fahrzeug-Fensterscheibe, aus Kunststoff, mit einer mindestens eine seiner Hauptflächen überdeckenden Beschichtung (4), mit durch Maskierung vor dem Beschichten von der Beschichtung frei gehaltenen Flächen, auf welche nach Entfernen der Maskierung weitere Materialien aufgebracht sind, **dadurch gekennzeichnet, dass** das anhaftende weitere Material den durch die Maskierung definierten Rand der Beschichtung geringfügig überdeckt.

18. Substrat nach Anspruch 17, **dadurch gekennzeichnet, dass** das anhaftende weitere Material den durch die Maskierung definierten Rand der Beschichtung in einer Breite von 0,1 bis 2 mm überdeckt.

19. Substrat nach Anspruch 17 oder 18, **dadurch gekennzeichnet, dass** es als mit einem randseitigen, auf einer schichtfrei gehaltenen Fläche haftenden Montageprofil (5) ausgestattete Fahrzeug-Fensterscheibe ausgeführt ist.

20. Substrat nach einem der Ansprüche 17 bis 19, **dadurch gekennzeichnet, dass** es mit einem randseitigen, auf einer schichtfrei gehaltenen Fläche oder auf dem Montageprofil (5) nach Anspruch 19 haftenden Klebestrang (6) versehen ist.

## Claims

1. Method of processing plastic substrates (1), comprising a step in which substrate partial surfaces are masked against undesirable coating of these partial surfaces, in which method, before a coating treatment of the substrate, certain surface portions of the substrate are covered by means of a removable masking (3) at least temporarily adhering to the substrate, **characterized in that** the masking (3) is applied by injecting or extruding a body of a plastic melt, weakly adhering to the substrate, onto such partial surfaces to which further materials are to be adhesively applied during further processing steps, wherein the processing temperature of the melt lies below that of the material or materials of the substrate, and the melt is matched to the material or materials of the substrate in such a way that the masking (3) can be pulled off after the coating of the substrate (1) without leaving any residues and without reducing the adhesiveness of the masked surface before the substrate is supplied for further processing.

2. Method according to Claim 1, **characterized in that** the substrate, after it has been initially formed in an injection mould, is provided with the masking (3) by being completely or partly demoulded and by being brought together with a mould, provided for applying the masking (3), for injecting the melt.

3. Method according to Claim 1 or 2, **characterized in that** the masking (3) is formed as a one-piece body or from a plurality of sections not connected to one another.

4. Method according to one of the preceding claims, **characterized in that** a reusable plastic prepared when required is used for producing the masking (3).

5. Method according to one of the preceding claims, **characterized in that** the masking (3) is made of a thermoplastic elastomer.

6. Method according to one of the preceding claims, **characterized in that** the substrate is covered with a scratch-resistant coating after the masking (3) has been applied.

7. Method according to one of the preceding claims, **characterized in that** the substrate is a vehicle component, in concrete terms a window pane and/or a body covering and/or a headlamp covering which consists of one or more transparent and/or coloured and/or opaque injection-moulded components.

8. Method according to one of the preceding claims, **characterized in that** the masking is applied in the marginal region of the planar or plate-like substrate in such a way that it covers a marginal strip of one or of both substrate main surfaces and/or its end edge.

9. Method according to one of the preceding claims for processing a plastic substrate (1), for example a plastic pane or panel, provided with a masking (3) and with a coating (4), **characterized in that,** after removal of the masking (3), at least one further material is adhesively applied to the surfaces of the substrate that have been kept free of the coating (4) by means of the masking.

10. Method according to Claim 9, **characterized in that** the temporary masking is not removed from the substrate until immediately before the application of further material.

11. Method according to Claim 9 or 10, **characterized in that,** after removal of the masking and before the application of the further material, an adhesion promoter is applied to the surfaces of the substrate (1) that have been kept free of the coating.

12. Method according to Claim 9 or 10 or 11, **characterized in that** a plastic profile (5), in particular a fitting profile for installation of the substrate in an installation environment, is applied by injecting or extruding onto surface portions of the substrate (1) that have been kept free of coating by the masking (3).

13. Method according to one of the preceding claims 9 to 11, **characterized in that** an adhesive strand (6) is applied to the surface portions of the substrate (1) that have been kept free of coating by the masking (3).

14. Method according to claims 12 and 13, **characterized in that** the adhesive strand is applied to an application surface of the fitting profile.

15. Method according to one of Claims 9 to 14, **characterized in that** the further material is applied in such a way that it only just covers the margin, defined by the masking, of the coating (4).

16. Method according to Claim 15, **characterized in that** the further material covers the margin, defined by the masking, of the coating (4) within a range of 0.1 to at most 2 mm.

17. Pane-shaped substrate (1), in particular vehicle window pane, made of plastic, having a coating (4) covering at least one of its main surfaces, having surfaces which are kept free of the coating by masking before the coating and to which further materials are applied after removal of the masking, **characterized in that** the adhering further material slightly covers the margin, defined by the masking, of the coating.

18. Substrate according to Claim 17, **characterized in that** the adhering further material covers the margin, defined by the masking, of the coating within a width of 0.1 to 2 mm.

19. Substrate according to Claim 17 or 18, **characterized in that** it is designed as a vehicle window pane provided with a marginal fitting profile (5) adhering to a surface kept free of coating.

20. Substrate according to one of Claims 17 to 19, **characterized in that** it is provided with a marginal adhesive strand (6) adhering to a surface kept free of coating or to the fitting profile (5) according to Claim 19.

## Revendications

1. Procédé pour traiter des substrats en matière plastique (1), comprenant une étape de masquage de surfaces partielles du substrat pour empêcher un revêtement indésirable de ces surfaces partielles, dans lequel, avant une opération de revêtement du substrat, des proportions de surface déterminées du substrat sont recouvertes au moyen d'un masquage (3) adhérant au moins temporairement sur le substrat et pouvant être enlevé, **caractérisé en ce que** le masquage (3) est appliqué par injection ou extrusion sur ces surfaces partielles d'un corps produit à partir d'une matière plastique en fusion adhérant faiblement au substrat, sur lesquelles surfaces partielles, dans des étapes de traitement supplémentaires, on doit appliquer par adhésion d'autres matériaux, la température de traitement de la matière en fusion étant inférieure à celle du matériau ou des matériaux du substrat, et la matière en fusion étant adaptée au matériau ou aux matériaux du substrat de telle sorte que le masquage (3) puisse être retiré après le revêtement du substrat (1) sans laisser de résidus et sans réduire la capacité d'adhésion de la surface masquée, avant que le substrat ne soit amené à l'autre traitement.

2. Procédé selon la revendication 1, **caractérisé en ce que** le substrat est pourvu du masquage (3) après son moulage initial dans un moule d'injection, en étant démoulé complètement ou partiellement et en étant mis en contact avec un moule d'injection de la matière en fusion prévu pour l'application du masquage (3).

3. Procédé selon la revendication 1 ou 2, **caractérisé en ce que** le masquage (3) est réalisé sous la forme de corps d'une seule pièce ou à partir de plusieurs portions non connectées les unes aux autres.

4. Procédé selon l'une quelconque des revendications précédentes, **caractérisé en ce que** pour fabriquer le masquage (3), on utilise une matière plastique recyclable et éventuellement prétraitée.

5. Procédé selon l'une quelconque des revendications précédentes, **caractérisé en ce que** le masquage (3) est fabriqué à partir d'un élastomère thermoplastique.

6. Procédé selon l'une quelconque des revendications précédentes, **caractérisé en ce que** le substrat, après l'application du masquage (3), est revêtu d'un revêtement résistant à l'abrasion.

7. Procédé selon l'une quelconque des revendications précédentes, **caractérisé en ce que** le substrat est un composant de véhicule, plus précisément une vitre et/ou un recouvrement de carrosserie et/ou un couvre-phare, qui se compose d'un ou de plusieurs composants moulés par injection, transparents et/ou colorés et/ou opaques.

8. Procédé selon l'une quelconque des revendications précédentes, **caractérisé en ce que** le masquage est appliqué dans la région du bord du substrat plat ou en forme de plaque, de telle sorte qu'il recouvre une bande de bord d'une ou des deux surfaces principales du substrat et/ou son arête frontale.

9. Procédé selon l'une quelconque des revendications précédentes pour traiter un substrat en matière plastique (1) pourvu d'un masquage (3) et d'un revêtement (4), par exemple une vitre ou une plaque en matière plastique, **caractérisé en ce qu'**après l'enlèvement du masquage (3), au moins un autre matériau est appliqué par adhésion sur les surfaces du substrat maintenues au moyen du masquage exemptes de revêtement (4).

10. Procédé selon la revendication 9, **caractérisé en ce que** le masquage temporaire est enlevé du substrat seulement juste avant l'application de l'autre matériau.

11. Procédé selon la revendication 9 ou 10, **caractérisé en ce qu'**après l'enlèvement du masquage et avant l'application de l'autre matériau, on applique un promoteur d'adhésion sur les surfaces du substrat (1) maintenues exemptes de revêtement.

12. Procédé selon la revendication 9 ou 10 ou 11, **caractérisé en ce que** l'on applique un profilé en matière plastique (5), notamment un profilé de montage pour l'installation du substrat dans un cadre d'installation, par injection ou extrusion sur des parties de la surface du substrat (1) maintenues exemptes de revêtement par le masquage (3).

13. Procédé selon l'une quelconque des revendications précédentes 9 à 11, **caractérisé en ce qu'**un boudin de colle (6) est appliqué sur les parties de la surface du substrat (1) maintenues exemptes de revêtement par le masquage (3).

14. Procédé selon l'une quelconque des revendications 12 et 13, **caractérisé en ce que** le boudin de colle est appliqué sur une surface d'application du profilé de montage.

15. Procédé selon l'une quelconque des revendications 9 à 14, **caractérisé en ce que** l'autre matériau est appliqué de telle sorte qu'il recouvre encore le bord du revêtement (4) défini par le masquage.

16. Procédé selon la revendication 15, **caractérisé en ce que** l'autre matériau recouvre le bord du revêtement (4) défini par le masquage dans une région de 0,1 à 2 mm au maximum.

17. Substrat (1) en forme de vitre, notamment vitre pour fenêtre de véhicule, constitué de matière plastique, avec un revêtement (4) recouvrant au moins l'une de ses surfaces principales, avec des surfaces maintenues exemptes de revêtement par le masquage avant le revêtement, sur lesquelles, après l'enlèvement du masquage, d'autres matériaux sont appliqués, **caractérisé en ce que** l'autre matériau adhérant recouvre légèrement le bord du revêtement défini par le masquage.

18. Substrat selon la revendication 17, **caractérisé en ce que** l'autre matériau adhérant recouvre le bord du revêtement défini par le masquage sur une largeur de 0,1 à 2 mm.

19. Substrat selon la revendication 17 ou 18, **caractérisé en ce qu'**il est réalisé sous forme de vitre de véhicule munie d'un profilé de montage (5) du côté du bord, adhérant à une surface maintenue exempte de revêtement.

20. Substrat selon l'une quelconque des revendications 17 à 19, **caractérisé en ce qu'**il est pourvu d'un boudin de colle (6) du côté du bord, adhérant sur une surface maintenue exempte de revêtement ou sur le profilé de montage (5) selon la revendication 19.
